# EUROPÄISCHE PATENTANMELDUNG

(11) **EP 1 122 420 A1**
(43) Veröffentlichungstag der Anmeldung: **08.08.2001**
(21) Anmeldenummer: 00124494.6
(22) Anmeldetag: 09.11.2000
(51) Int. Cl.: F02F 5/00, F16J 9/16

(54) **Kolben-Kolbenring-System**

(30) Priorität: 02.02.2000 DE 10004589
(71) Anmelder: Federal-Mogul Burscheid GmbH, 51399 Burscheid (DE)
(72) Erfinder: Esser, Peter-Klaus, 51515 Kürten (DE)

(57) **Zusammenfassung**

Kolben-Kolbenring-System, wobei der insbesondere aus Aluminium bestehende Koben (1) zur Aufnahme von Kolbenringen (6,7,8) mit mehreren Nuten (2,3,4,5) versehen ist, dadurch gekennzeichnet, daß die dem Kolbenboden zugewandte Nut (2) axial höher als die sich daran anschließenden Nuten (3,4,5) ausgebildet ist, und daß unterhalb der axial höheren Nut (2) zur Aufnahme von einzelnen, zumindest teilweise federbestückten Stahlbandringen (6,7,8) geringer axialer Höhe mindestens drei weitere Nuten (3,4,5) angeordnet sind.

## Beschreibung

Die Erfindung betrifft ein Kolben-Kolbenring-System, wobei der, insbesondere aus Aluminium bestehende, Kolben zur Aufnahme von Kolbenringen mit mehreren Nuten versehen ist.

Es ist allgemein bekannt, Kolben mit drei Nuten zu versehen, wobei die dem Kolbenboden abgewandte dritte Nut mit einem zwei- oder dreiteiligen Ölabstreifkolbenring bestückt ist. Nachteilig ist, daß mehrteilige Kolbenringe bei der Kolbenbestückung vielfach Montageprobleme bedingen.

Der JP-A 10169506 ist ein Kolben zu entnehmen, der in zugänglichen Nuten vier Kolbenringe aufnimmt. Die dem Brennraum zugewandten ersten beiden Kolbenringe dienen hierbei als Kompressionsringe, während die sich daran anschließenden Kolbenringe dem Ölabstreifen bzw. Ölrückführen dienen. Die im Kolben vorgesehenen Nuten sind etwa axial gleich hoch ausgebildet.

Durch die WO 97/10424 ist eine Kombination eines Kolben-Kompressionkolbensring-Systemes bekannt geworden. Angedeutet sind zwei übereinander angeordnete, etwa gleich hoch bauende Nuten im Kolben, die zur Aufnahme etwa baugleicher, mehrteiliger Kompressionskolbenringe dienen.

Durch die DE-A 196 02 716 ist eine Kolbendichtung für in Zylindern bewegbaren Kolben mit zwei in einer Kolbennut übereinander mit versetzten Umfangsschlitzen angeordneten Kolbenringen bekannt geworden, wobei die Kolbenringe unterschiedliche radiale Dicken aufweisen und der geringer dimensionierte Kolbenring einen Flachstreifen aufnimmt.

Der Erfindung liegt die Aufgabe zugrunde, ein Kolben-Kolbenring-System zu konzipieren, das eine geringere Bauhöhe des Kolbens ermöglicht, wobei eine bedarfsweise individuelle Anpassung der Kolbenringe an die Zylinderwand gegeben sein soll.

Diese Aufgabe wird dadurch gelöst, daß die dem Kolbenboden zugewandte Nut axial höher als die sich daran anschließenden Nuten ausgebildet ist, und daß unterhalb der axial höheren Nut zur Aufnahme von einzelnen, zumindest teilweise federbestückten, Stahlbandringen geringerer axialer Höhe mindestens drei weitere Nuten angeordnet sind.

Vorteilhafte Weiterbildungen des Erfindungsgegenstandes sind den Unteransprüchen zu entnehmen.

Das erfindungsgemäße Kolben-Kolbenring-System beinhaltet somit in seiner einfachsten Ausführung eine axial höhere Nut zur Aufnahme eines Kompressionskolbenringes sowie vorzugsweise lediglich drei sich daran anschließende Nuten relativ geringer axialer Bauhöhe zur Aufnahme von ebenfalls axial relativ gering dimensionierten, federbelasteten Stahlbandringen.

Durch diese Maßgabe wird erreicht, daß die Bauhöhe des Kolbens im Vergleich mit bisherigen Bauformen reduziert werden kann. Gegenüber der JP-A 10169506 kann auf den zweiten Kompressionsring verzichtet werden. Durch unterschiedliche Dimensionierung der auf den jeweiligen Stahlbandring einwirkenden Federkraft kann eine individuelle Anpassung der Stahlbandringe an die Zylinderwand realisiert werden.

Die Tangentialkräfte können je nach Anwendungsfall zwischen 5 und 50 N, vorzugsweise zwischen 10 und 20 N, variieren. Ebenso kann die axiale Höhe der Stahlbandringe variabel gehalten werden. Vorzugsweise kommen Stahlbandringe mit einer axialen Bauhöhe < 1,0 mm, insbesondere < 0,6 mm, zum Einsatz, wobei auch vom Wickeldurchmesser her entsprechend gering dimensionierte Federringe erzeugt werden müssen, was durch heutige Herstellungstechniken jedoch problemlos möglich ist.

Einem weiteren Gedanken der Erfindung gemäß nimmt die auf die Zylinderwand wirksame Tangentialkraft vom ersten, der axial höher dimensionierten Nut zugewandten Stahlbandring zu dem bzw. den sich daran anschließenden Stahlbandring(en) ab, wobei vorzugsweise der erste federbelastete Stahlbandring eine etwa doppelt so hohe Anpreßkraft, wie die sich daran anschließenden Stahlbandringe aufweist.

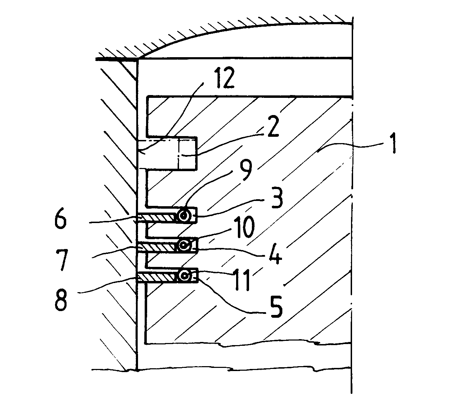

Der Erfindungsgegenstand ist anhand eines Ausführungsbeispieles in der Zeichnung dargestellt und wird wie folgt beschrieben.

Die einzige Figur zeigt als Prinzipskizze eine Teildarstellung des erfindungsgemäßen Kolben-Kolbenring-Systemes.

Angedeutet ist ein, in dem Beispiel aus Aluminium bestehender Kolben 1, der mehrere Nuten 2,3,4,5 aufweist. Die zur Aufnahme eines hier nicht weiter dargestellten Kompressionskolbenringes dienende Nut 2 ist axial höher ausgebildet, als die sich daran anschließenden Nuten 3,4 und 5. Die Nuten 3,4, und 5 dienen zur Aufnahme jeweils eines einzelnen Stahlbandringes 6,7,8, die jeweils durch einen Federring 9,10,11 an die korrespondierende Zylinderwand 12 angedrückt werden. Durch unterschiedliche Dimensionierung der Federringe 9,10,11 kann eine individuelle Anpassung der Stahlbandringe 6,7,8 an die Zylinderwand 12 realisiert werden, wobei gleichzeitig eine kürzere Bauhöhe des Kolbens ermöglicht wird.

Die Stahlbandringe 6,7,8 weisen axiale Bauhöhen < 0,6 mm auf. Die durch die Federn 9,10,11 ausgeübten Tangentialkräfte können je nach Anwendungsfall zwischen 10 und 20 N eingestellt werden, wobei der, der axial höheren Nut 2 zugewandte Stahlbandring 6 vorzugsweise eine größere Tangentialkraft als die übrigen Stahlbandringe 7,8 auf die Zylinderwand 12 ausübt. In diesem Beispiel soll der Stahlbandring 6 eine Tangentialkraftkomponente von 20 N ausüben, während die beiden folgenden Stahlbandringe 7 und 8 jeweils mit 10 N auf die Zylinderwand 12 einwirken.

## Patentansprüche

1. Kolben-Kolbenring-System, wobei der insbesondere aus Aluminium bestehende Kolben (1) zur Aufnahme von Kolbenringen (6,7,8) mit mehreren Nuten (2,3,4,5) versehen ist, dadurch gekennzeichnet, daß die dem Kolbenboden zugewandte Nut (2) axial höher als die sich daran anschließenden Nuten (3-5) ausgebildet ist, und daß unterhalb der axial höheren Nut (2) zur Aufnahme von einzelnen, zumindest teilweise federbestückten Stahlbandringen (6,7,8) geringer axialer Höhe mindestens drei weitere Nuten (3-5) angeordnet sind.

2. Kolben-Kolbenring-System nach Anspruch 1, dadurch gekennzeichnet, daß die axial geringer dimensionierten Nuten (3-5) zur Aufnahme von Stahlbandringen mit axialen Bauhöhen (6-8) < 1,0 mm, insbesondere < 0,6 mm, vorgesehen sind.

3. Kolben-Kolbenring-System nach Anspruch 1 oder 2, dadurch gekennzeichnet, daß die axiale Bauhöhe der Nuten (3-5) im wesentlichen gleich ausgebildet ist.

4. Kolben-Kolbenring-System nach einem der Ansprüche 1 bis 3, dadurch gekennzeichnet, daß alle Stahlbandringe (6-8) mit Federringen (9,10,11) bestückt sind.

5. Kolben-Kolbenring-System nach einem der Ansprüche 1 bis 4 gekennzeichnet durch bezüglich ihrer Federkraft unterschiedlich dimensionierte Federringe (9,10,11).

6. Kolben-Kolbenring-System nach einem der Ansprüche 1 bis 5, dadurch gekennzeichnet, daß die auf die Zylinderwand (12) einwirkende Federkraft der einzelnen Federringe (9-11) zwischen 5 und 50 N, insbesondere zwischen 10 und 20 N, beträgt.

7. Kolben-Kolbenring-System nach einem der Ansprüche 1 bis 6, dadurch gekennzeichnet, daß Federkraft des Stahlbandringes (6) der der axial höheren Nut (2) zugewandt ist, größer als diejenige Federkraft des bzw. der sich daran anschließenden Stahlbandringe(s) (7,8). ist

8. Kolben-Kolbenring-System nach einem der Ansprüche 1 bis 7, dadurch gekennzeichnet, daß die Federkraft des der axial höheren Nut (2) zugewandten Stahlbandringes (6) etwa doppelt so groß ist, wie die Federkraft des bzw. der sich daran anschließenden Stahlbandringe(s) (7,8).
